# FASCICULE DE BREVET EUROPEEN

(11) **EP 0 941 685 B1**
(45) Date de publication et mention de la délivrance du brevet: **30.05.2001**
(21) Numéro de dépôt: 99400561.9
(22) Date de dépôt: 08.03.1999
(51) Int. Cl.: A47J 37/06

(54) **Appareil de cuisson du type barbecue**
Kochgerät vom Barbecue-Typ
Cooking utensil of the barbecue type

(30) Priorité: 13.03.1998 FR 9803137
(43) Date de publication de la demande: 15.09.1999
(73) Titulaire: SEB S.A., 69130 Ecully (FR)
(72) Inventeur: Houin, Guy, 74150 Rumilly (FR)
(74) Mandataire: Keib, Gérard

(56) Documents cités:
- EP-A- 0 818 168
- DE-U- 29 502 970
- DE-U- 29 502 971
- DE-U- 29 621 984
- GB-A- 2 140 672
- US-A- 1 751 726
- US-A- 5 176 067

## Description

La présente invention concerne un appareil de cuisson du type barbecue comprenant une plaque de cuisson comportant au moins une ouverture d'écoulement du jus de cuisson, une résistance électrique de chauffage s'étendant sous la plaque de cuisson, un réflecteur du rayonnement calorifique émis par la résistance électrique de chauffage s'étendant sous cette dernière et un socle étant disposé sous le réflecteur.

Un tel appareil de cuisson a été décrit par exemple dans le brevet français 2 750 846 au nom de la demanderesse.

Le but de la présente invention est de créer un appareil de cuisson du type barbecue dont la structure est simple, compacte, constituée par un nombre minimum de pièces, tout en étant pratique à utiliser et facile à nettoyer.

Suivant l'invention, cet appareil de cuisson est caractérisé en ce que :
- le réflecteur est constitué par une plaque en tôle emboutie comportant un rebord périphérique faisant saillie vers le haut et servant de surface d'appui pour la plaque de cuisson,
- un réflecteur comprenant dans sa partie centrale une cavité emboutie vers le bas, recevant un récipient de collecte du jus de cuisson disposé en regard de l'ouverture d'écoulement du jus de cuisson pratiquée dans la plaque de cuisson,
- la résistance électrique de chauffage comprenant deux extrémités opposées dirigées vers l'extérieur, engagées dans des ouvertures respectives ménagées dans des bossages faisant saillie vers le haut, emboutis dans la plaque constituant le réflecteur, lesdites extrémités de la résistance étant montées de façon articulée dans lesdites ouvertures pour pouvoir relever la résistance par rapport au réflecteur.

Ainsi, le réflecteur en tôle emboutie d'une seule pièce joue non seulement la fonction de réflecteur, mais également les fonctions de support et d'élément de centrage de la plaque de cuisson, de support et d'élément de centrage du récipient de collecte des jus de cuisson, de support de montage articulé de la résistance de chauffage et de couvercle pour le socle.

De ce fait, la construction de l'appareil ne nécessite que très peu de pièces, ce qui la rend économique.

De plus, le fait que la résistance électrique soit relevable facilite le nettoyage du réflecteur et l'enlèvement du récipient de collecte des jus de cuisson.

De préférence, la plaque de cuisson est constituée par une tôle emboutie comportant un rebord périphérique comprenant une partie faisant saillie vers le haut et une aile faisant saillie vers le bas encadrant une aile faisant saillie vers le bas du rebord périphérique du réflecteur.

On obtient ainsi un excellent centrage de la plaque de cuisson par rapport au réflecteur.

Selon une version avantageuse de l'invention, la plaque de cuisson comprend deux surfaces constituant une pente inclinée vers le milieu de la plaque, une ouverture d'écoulement du jus de cuisson s'étendant au milieu de la plaque au point le plus bas de celle-ci.

Cette disposition facilite l'écoulement des jus de cuisson dans le récipient de collecte.

De préférence également, la cavité du réflecteur qui reçoit le récipient de collecte est entourée par une protubérance emboutie vers le haut et l'espace compris entre le rebord périphérique embouti vers le haut sert de logement pour ladite résistance électrique de chauffage.

D'autres particularités et avantages de l'invention apparaîtront encore dans la description ci-après.

Aux dessins annexés, donnés à titre d'exemples non limitatifs :

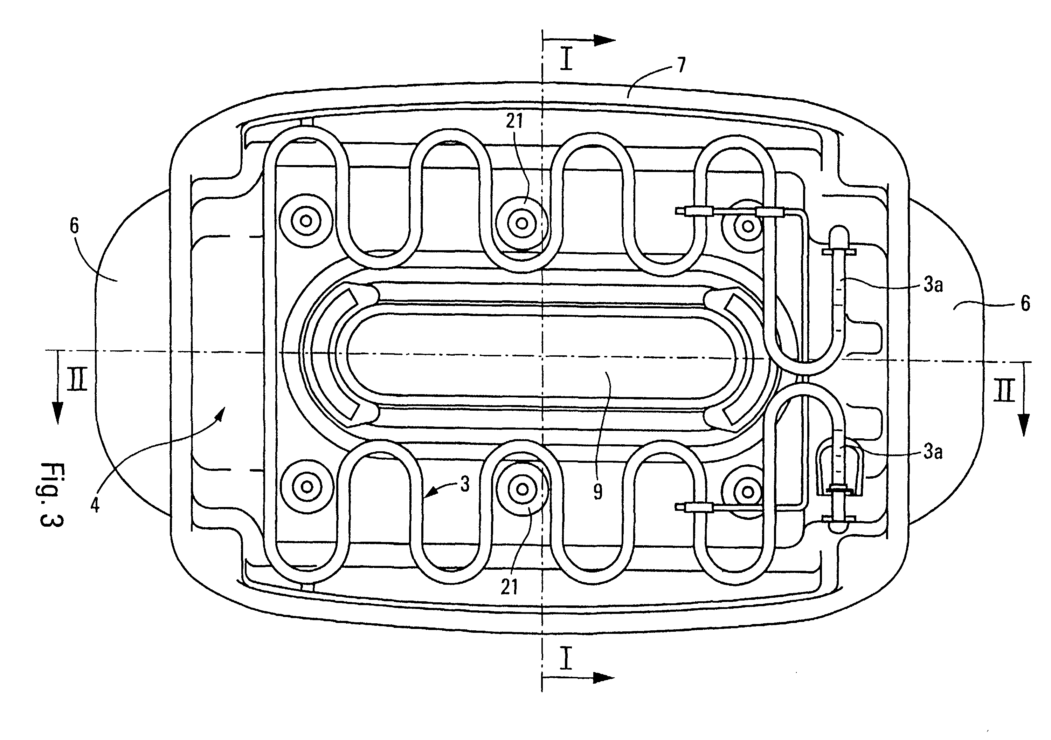

- la figure 1 est une vue en coupe suivant le plan I-I de la figure 3 d'un appareil de cuisson conforme à l'invention,
- la figure 2 est une vue en coupe suivant le plan II-II de la figure 3,
- la figure 3 est une vue en plan de l'appareil de cuisson après enlèvement de la plaque de cuisson.

Dans la réalisation représentée sur les figures annexées, l'appareil de cuisson du type barbecue comprend une plaque de cuisson 1 comportant au moins une ouverture 2 d'écoulement du jus de cuisson, une résistance électrique de chauffage 3 s'étendant sous la plaque de cuisson 1, un réflecteur 4 du rayonnement calorifique émis par la résistance électrique de chauffage s'étendant sous cette dernière et un socle 5 muni de poignées 6 formant pieds, disposé sous le réflecteur 4.

Conformément à l'invention, le réflecteur 4 est constitué par une plaque en tôle emboutie d'une seule pièce, comportant un rebord périphérique 7 faisant saillie vers le haut et servant de surface d'appui pour la plaque de cuisson 1.

Par ailleurs, le réflecteur 4 comprend dans sa partie centrale, une cavité 8 emboutie vers le bas, recevant un récipient 9 de collecte du jus de cuisson disposé en regard de l'ouverture 2 d'écoulement du jus de cuisson, pratiquée dans la plaque de cuisson 1.

D'autre part, la résistance électrique de chauffage 3 comprend deux extrémités opposées 3a dirigées vers l'extérieur, engagées dans des ouvertures respectives 10 ménagées dans des bossages 11 faisant saillie vers le haut. Ces bossages 11 sont emboutis dans la plaque constituant le réflecteur 4. En outre, les extrémités 3a de la résistance 3 sont montées de façon articulée dans les ouvertures 10 pour pouvoir relever la résistance 3 par rapport au réflecteur 4.

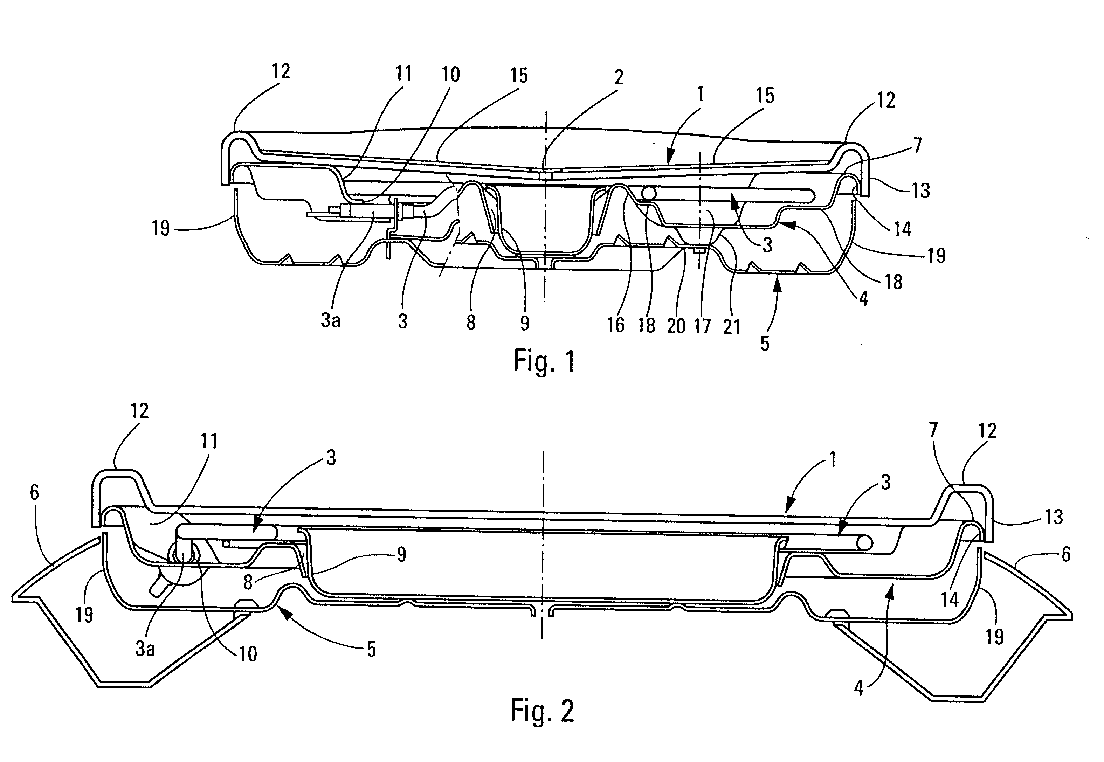

Comme montré par les figures 1 et 2, la plaque de cuisson 1 est constituée par une tôle emboutie comportant un rebord périphérique 12 comprenant une partie faisant saillie vers le haut et une aile 13 faisant saillie vers le bas. Cette aile 13 encadre une aile 14 faisant saillie vers le bas du rebord périphérique 7 du réflecteur 4.

Par ailleurs, la plaque de cuisson 1 comprend (voir figure 2) deux surfaces 15 constituant une pente inclinée vers le milieu de la plaque 1.

L'ouverture 2 d'écoulement du jus de cuisson s'étend au milieu de la plaque 1 au point le plus bas de celle-ci.

On voit notamment sur la figure 1 que la cavité 8 du réflecteur qui reçoit le récipient 9 de collecte est entourée par une protubérance 16 emboutie vers le haut.

De plus, l'espace 17 compris entre le rebord périphérique 7 du réflecteur 4 et la protubérance 16 emboutie vers le haut, sert de logement pour la résistance électrique de chauffage 3.

Par ailleurs, le logement pour la résistance 3 comprend près du rebord périphérique 7 et près de la protubérance 16 des méplats 18 emboutis dans le réflecteur 4 servant de surfaces d'appui pour la résistance 3.

Les figures 1 et 2 montrent d'autre part que le socle 5 est constitué par une tôle emboutie comprenant une aile périphérique 19 faisant saillie vers le haut et rejoignant sensiblement le rebord périphérique 7 du réflecteur 4.

De plus, le socle 5 comprend (voir figure 1) des reliefs 20 emboutis vers le haut servant d'appui pour les reliefs 21 emboutis vers le bas, pratiqués dans le réflecteur 4, les reliefs 20 du socle 5 étant fixés aux reliefs 21 du réflecteur 4.

La structure du barbecue que l'on vient de décrire est particulièrement simple et économique, puisqu'elle est entièrement réalisée par trois pièces en tôle emboutie, en plus de la résistance électrique de chauffage.

Le réflecteur 4 remplit plusieurs fonctions (réflecteur, centrage et support de la plaque de cuisson, support articulé de la résistance, support du récipient de collecte du jus et couvercle du socle).

Pour nettoyer le réflecteur, il suffit d'enlever la plaque de cuisson 1 et de relever la résistance 3.

Bien entendu, l'invention n'est pas limitée aux exemples que l'on vient de décrire et on peut apporter à ceux-ci de nombreuses modifications sans sortir du cadre de l'invention.

## Revendications

1. Appareil de cuisson du type barbecue comprenant une plaque de cuisson (1) comportant au moins une ouverture (2) d'écoulement du jus de cuisson, une résistance électrique de chauffage (3) s'étendant sous la plaque de cuisson (1), un réflecteur (4) du rayonnement calorifique émis par la résistance électrique de chauffage (3) s'étendant sous cette dernière et un socle (5) étant disposé sous le réflecteur (4), caractérisé en ce que :
- le réflecteur (4) est constitué par une plaque en tôle emboutie comportant un rebord périphérique (7) faisant saillie vers le haut et servant de surface d'appui pour la plaque de cuisson (1),
- un réflecteur (4) comprenant dans sa partie centrale une cavité (8) emboutie vers le bas, recevant un récipient (9) de collecte du jus de cuisson disposé en regard de l'ouverture (2) d'écoulement du jus de cuisson, pratiquée dans la plaque de cuisson (1),
- la résistance électrique de chauffage (3) comprenant deux extrémités (3a) opposées dirigées vers l'extérieur, engagées dans des ouvertures respectives (10) ménagées dans des bossages (11) faisant saillie vers le haut emboutis dans la plaque constituant le réflecteur (4), lesdites extrémités (3a) de la résistance (3) étant montées de façon articulée dans lesdites ouvertures (10) pour pouvoir relever la résistance (3) par rapport au réflecteur (4).

2. Appareil de cuisson conforme à la revendication 1, caractérisé en ce que la plaque de cuisson (1) est constituée par une tôle emboutie comportant un rebord périphérique (12) comprenant une partie faisant saillie vers le haut et une aile (13) faisant saillie vers le bas encadrant une aile (14) faisant saillie vers le bas du rebord périphérique (7) du réflecteur (4).

3. Appareil de cuisson conforme à l'une des revendications 1 ou 2, caractérisé en ce que la plaque de cuisson (1) comprend deux surfaces (15) constituant une pente inclinée vers le milieu de la plaque (1), une ouverture (2) d'écoulement du jus de cuisson s'étendant au milieu de la plaque (1) au point le plus bas de celle-ci.

4. Appareil de cuisson conforme à l'une des revendications 1 à 3, caractérisé en ce que la cavité (8) du réflecteur (4) qui reçoit le récipient (9) de collecte est entourée par une protubérance (16) emboutie vers le haut.

5. Appareil conforme à la revendication 4, caractérisé en ce que l'espace (17) compris entre le rebord périphérique (7) du réflecteur (4) et la protubérance (16) emboutie vers le haut sert de logement pour ladite résistance électrique de chauffage (3).

6. Appareil conforme à la revendication 5, caractérisé en ce que ledit logement pour la résistance (3) comprend près dudit rebord périphérique (7) et près de ladite protubérance (16) des méplats (18) emboutis dans le réflecteur (4) servant de surfaces d'appui pour la résistance (3).

7. Appareil conforme à l'une des revendications 1 à 6, caractérisé en ce que le socle (5) est constitué par une tôle emboutie comprenant une aile périphérique (19) faisant saillie vers le haut et rejoignant sensiblement le rebord périphérique du réflecteur (4).

8. Appareil conforme à la revendication 7, caractérisé en ce que le socle (5) comprend des reliefs (20) emboutis vers le haut servant d'appui pour les reliefs (21) emboutis vers le bas pratiqués dans le réflecteur (4), les reliefs (20) du socle (5) étant fixés aux reliefs (21) du réflecteur (4).

## Patentansprüche

1. Kochgerät vom Barbecue-Typ, das eine Kochplatte (1) mit wenigstens einer Abfließöffnung (2) für den Kochsaft, einen unter der Kochplatte (1) verlaufenden elektrischen Heizwiderstand (3), einen Reflektor (4) für die von dem elektrischen Heizwiderstand (3) abgegebenen Wärmestrahlung, der unter diesem letzteren verläuft, und einen unter diesem Reflektor (4) angeordneten Sockel (5) umfaßt, dadurch gekennzeichnet, dass:
- der Reflektor (4) von einer gewölbten Blechplatte mit einer um den Umfang reichenden Randleiste (7), die nach oben ragt und als Stützfläche für die Kochplatte (1) dient, gebildet ist,
- ein Reflektor (4) in seinem mittleren Teil einen nach unten gewölbten Hohlraum (8) umfaßt, der ein Sammelgefäß (9) für den Kochsaft aufnimmt, das gegenüber der Ausfließöffnung (2) für den in der Kochplatte (1) gebildeten Kochsaft angeordnet ist,
- der elektrische Heizwiderstand (3) zwei gegenüberliegende nach außen gerichtete Enden (3a) umfaßt, die in jeweilige Öffnungen (10) eingreifen, die in nach oben ragenden und in in der den Reflektor (4) bildenden Platte ausgebuchteten Höckern (11) angeordnet sind, wobei die genannten Enden (3a) des Widerstandes (3) in den genannten Öffnungen (10) in gelenkiger Weise anbracht sind, um den Widerstand (3) in Bezug auf den Reflektor (4) anheben zu können.

2. Kochgerät nach Anspruch 1, dadurch gekennzeichnet, dass die Kochplatte (1) von einem gewölbten Blech mit einer um den Umfang reichenden Randleiste (12) gebildet ist, welche einen nach oben ragenden Teil und einen nach unten ragenden Flügel (13), der einen nach unten ragenden Flügel (14) der um den Umfang reichenden Randleiste (7) des Reflektors (4) umrahmt, aufweist.

3. Kochgerät nach einem der Ansprüche 1 oder 2, dadurch gekennzeichnet, dass die Kochplatte (1) zwei Oberflächen mit einer zur Mitte der Platte (1) geneigten Schräge und eine Ausfließöffnung (2) für den Kochsaft, die in der Mitte der Platte (1) an deren tiefsten Stelle verläuft, aufweist.

4. Kochgerät nach einem der Ansprüche 1 bis 3, dadurch gekennzeichnet, dass der Hohlraum (8) des Reflektors (4), der das Sammelgefäß (9) aufnimmt, von einer nach oben gewölbten Ausstülpung (16) umgeben ist.

5. Kochgerät nach Anspruch 4, dadurch gekennzeichnet, dass der Raum (17) zwischen der um den Umfang reichenden Randleiste (7) des Reflektors (4) und der nach oben gewölbten Ausstülpung (16) als Sitz für den genannten elektrischen Heizwiderstand (3) dient.

6. Kochgerät nach Anspruch 5, dadurch gekennzeichnet, dass der genannte Sitz für den Widerstand (3) nahe der genannten um den Umfang reichenden Randleiste (7) und nahe der genannten Ausstülpung (16) in dem Reflektor (4) ausgebuchtete flache Stellen (18) aufweist, die als Stützfläche für den Widerstand (3) dienen.

7. Kochgerät nach einem der Ansprüche 1 bis 6, dadurch gekennzeichnet, dass der Sockel (5) von einem gewölbten Blech gebildet wird, das einen um den Umfang reichenden Flügel (19) aufweist, der nach oben ragt und die um den Umfang reichende Randleiste des Reflektors (4) im wesentlichen erreicht.

8. Kochgerät nach Anspruch 7, dadurch gekennzeichnet, dass der Sockel (5) nach oben gewölbte Erhöhungen (20) aufweist, die als Stütze für die nach unten gewölbten und in dem Reflektor (4) gebildeten Erhöhungen (21) dienen, wobei die Erhöhungen (20) des Sockels (5) an den Erhöhungen (21) des Reflektors (4) befestigt sind.

## Claims

1. Cooking appliance of the barbecue type comprising a cooking plate (1) which has at least one opening (2) through which cooking juices can flow, an electrical heating element (3) extending under the cooking plate (1), a reflector (4) of the heat radiation emitted by the electric heating element (3) extending under the latter, and a base (5) being arranged under the reflector (4), characterized in that:
- the reflector (4) consists of a pressed metal sheet comprising a peripheral rim (7) projecting upwards and acting as a support surface for the cooking plate (1),
- a reflector (4) comprising, in its central part, a cavity (8) pressed downwards, containing a container (9) for collecting the cooking juices arranged opposite the opening (2) made in the cooking plate (1) for the cooking juices to flow through,
- the electrical heating element (3) comprising two opposite ends (3a) directed outwards, engaged in respective openings (10) formed in bosses (11) projecting upwards and pressed in the plate constituting the reflector (4), the said ends (3a) of the element (3) being mounted in an articulated manner in the said openings (10) so that the element (3) can be lifted up with respect to the reflector (4).

2. Cooking appliance according to Claim 1, characterized in that-the cooking plate (1) consists of a pressed metal sheet comprising a peripheral rim (12) comprising an upwardly projecting part and a downwardly projecting flange (13) fitting around a downwardly projecting flange of the peripheral rim (7) of the reflector (4).

3. Cooking appliance according to either of Claims 1 and 2, characterized in that the cooking plate (1) comprises two surfaces (15) constituting a slope sloping towards the middle of the plate (1), an opening (2) for cooking juices to flow through extending at the middle of the plate (1) at the lowermost point thereof.

4. Cooking appliance according to one of Claims 1 to 3, characterized in that the cavity (8) of the reflector (4) which contains the collecting container (9) is surrounded by a pressed projection (16) projecting upwards.

5. Appliance according to Claim 4, characterized in that the space (17) between the peripheral rim (7) of the reflector (4) and the pressed projection (16) projecting upwards acts as a housing for the said electrical heating element (3).

6. Appliance according to Claim 5, characterized in that the said housing for the element (3) comprises, near the said peripheral rim (7) and near the said projection (16), flaps (18) pressed in the reflector (4) and acting as bearing surfaces for the element (3).

7. Appliance according to one of Claims 1 to 6, characterized in that the base (5) consists of a pressed metal sheet comprising a peripheral flange (19) projecting upwards and practically meeting the peripheral rim of the reflector (4).

8. Appliance according to Claim 7, characterized in that the base (5) comprises pressed reliefs (20) facing upwards and acting as supports for pressed reliefs (21) facing downwards and made in the reflector (4), the reliefs (20) of the base (5) being fixed to the reliefs (21) of the reflector (4).
